# EUROPEAN PATENT APPLICATION

(11) **EP 0 619 949 A1**
(43) Date of publication of application: **19.10.1994**
(21) Application number: 94301772.3
(22) Date of filing: 11.03.1994
(51) Int. Cl.: A23G 9/02

(54) **Ice confection covered by a coating based on gelatin and sugar**

(30) Priority: 12.03.1993 ES 9300515
(71) Applicant: UNILEVER PLC, London EC4P 4BQ (GB); UNILEVER N.V., NL-3013 AL Rotterdam (NL)
(72) Inventor: Perez Amat, Mercedes, E-08440 Cardedeu Barcelona (ES)
(74) Representative: Kirsch, Susan Edith

(57) **Abstract**

A core of edible ice confection consisting of the usual components of an edible ice in a suitable configuration has a thin coating of a mixture of gelatin, sugar, glucose syrup and water with a point of fusion sufficiently higher than that of the edible ice to have a protective effect and prevent thawing on contact with the fingers during consumption.

The gelatin is hydrated in part of the water at 70°C, while the sugar is separately dissolved in the rest of the water at boiling point. The glucose syrup and the hydrated gelatin are then added to the dissolved sugar, the mixture is left to cool to a temperature of 60-65°C and additives such as citric acid, colour and flavouring are added. This product is moulded and frozen, and the appropriate amount of the edible ice confection constituting the cores is deposited into it. The end product may be obtained by the insertion of a stick or support and has a transparent and unbreakable coating.

## Description

### Field of the invention:

This invention relates to improvements in edible ice products of type commonly called ice confections. More specifically it relates to those intended to be held in the hand during consumption, which are specially structured so as to prevent the ice from melting because of the heat transmitted during consumption and to keep the ice in a stable condition for an appropriate time to allow consumption. The invention is applicable to ice confections in general; examples are ice cream, ice milk, frozen yoghurts, frozen custards, water ice and sorbets.

### Background to the invention:

The wide range of forms or versions in which edible ice confections reach the consumer includes blocks of different sizes or shapes that are offered to the consumer in suitable packaging. At the time of consumption the ice is removed from the packaging and held in the hand and it has an outer coating intended to prevent the block from melting due to the effect of heat flowing into it from the fingers. This coating is generally based on chocolate.

This solution requires immediate consumption of the product when it is taken from the refrigerator, as the chocolate starts to melt within a very short time when in contact with the fingers, because its melting point is quite low, in some cases even lower than that of the ice. This means that in reality the coating does not prevent soiling of the consumer's fingers.

The true purpose of this type of coating is not to prevent the ice from melting but to offer a complementary flavour so that the flavour of the said coating contrasts with or complements that of the block of ice confection inside it.

One solution is supplied in Spanish patent application 9200586, comprising the covering of an "ice" core of any conventional composition with a coating based on an edible vegetable fat mixed with sugars. It has certain proportions of its components and a suitable thickness so that, as the vegetable fat has melting point considerbly higher than that of the "ice", the product may be held in the hand long enough for its consumption without making the hands dirty.

However, the product obtained in this patent appliction can be improved in terms of its presentation and composition and of the process by which it is obtained.

### General Description of the invention:

The improvements that are the object of this present invention use different components in the mixture to obtain the coating, and also include modifications to the process for obtaining the product for this variation in these components.

More specifically, the improvements provide for the use of gelatin and sugar and the mixture also preferably contains glucose syrup in addition to sugar, as well as citric acid, colouring and flavouring as additives. Preferably the coating has a thickness in the range 0.5 to 3.00 mms and it is preferably transparent. A preferred ice product has a coating with the composition 3 to 10% gelatin, 20 to 35% sugar and 30 to 50% glucose syrup in an aqueous base.

More specifically, the gelatin is present in the mixture at a level of the order of 60 parts per thousand, the sugar at 290 parts and the glucose syrup at 385 parts, the remaining 265 parts consisting of the water in which the gelatin is hydrated and in which the sugar is dissolved.

The coating so obtained will have a thickness of approximately one millimetre and will be transparent, allowing the colour of the ice core it encloses to be seen through it, but may be of any colour itself, according to the additive used for this purpose in the mixture.

The process for the manufacture of the product has the following stages:
i) hydration of the gelatin in water preferably at a temperature 70°C, with about 125 parts of water for every 60 parts of gelatine;
ii) dissolution of the sugar in the remainder of the water, bringing the latter to boiling point, and continuous addition of the glucose syrup; that is, all the ingredients are mixed and the mixture is heated to boiling point;
iii) addition of the hydrated gelatin to the above solution;
iv) leaving the mixture to reach a temperature between 60 and 65°C and elimiinating the froth;
v) optional addition of the acid, colouring and flavouring;
vi) putting the mixture into suitable moulds, preferably of metal;
vii) freezing and removal of the inner part of the mould.
viii) introduction of the core of ice confection.
ix) optional insertion of the stick or support and demoulding and optional packaging to obtain a product covered with the coating.

The machinery used for cooling is preferably of the rotary type with a spray system. The product obtained has the following characteristics:
- transparent
- unbreakable
- totally protected
- does not melt
- insulating
- does not stain
- does not deform
- keeps its shape even when the ice melts

### Specific description of the invention:

One example of the invention will be given to illustrate but not limit it.

The ice confection that forms the core of the desired product can be made of different flavours, for example on the basis of a typical formulation for sorbets as follows:

| | |
|---|---|
| Sugars | 20% |
| Stabiliser | 0.2% |
| Juice | 2% |
| Coloring | 0.1% |
| Flavouring | 0.22% |
| Water | 77.68% |

Starting with a typical formulation such as this or any other considered appropriate, the mixture is extruded using suitable nozzles to produce the desired profile or shape for each piece of the product.

A continuous body is obtained at the exit from the extruder, and in a subsequent stage of the process this is divided into equal portions of suitable size using a wire arranged transversley, which cuts the continuous body perpendicular to its axis.

The portions obtained are deposited on a conveyer belt that carries them to a freezing tunnel in which they are suitably hardened.

Working in parallel, the coating for the core is obtained from the following ingredients:

| | |
|---|---|
| Gelatin 220 bloom | 6% |
| Water A | 12.5% |
| Sugar | 29% |
| Water B | 14% |
| Glucose syrup 38 DE, 43 BE | 38.5% |
| Citric acid (50% water) | |
| Colouring | |
| Flavouring | |

Water A is the portion for hydration of the gelatin and Water B is for dissolving the sugar, while the citric acid, colouring and flavouring are present in significant amounts.

Hydration of the gelatin with Water A is carried out at a temperature of approximately 75°C, while the sugar is dissolved in Water B by heating the latter to boiling point, at which stage the glucose syrup and hydrated gelatin are added to the sugar solution.

The resultant mixture is then left to stand until the temperature is between 60 and 65°C, eliminating the froth that forms.

Finally, the acid, colouring and flavouring are added, making the mixture ready to be deposited in metal moulds to give the coating the appropriate shape for the ice in question. These moulds are subjected to a freezing stage, after which the male or internal part is removed so that the solid coating is able to receive the "ice confection" proper (with the typical composition for sorbets referrred to previously). The coating acting as a mould for the sorbet into which the classical stick or support is finally inserted, thereby obtaining the end product, which, after demoulding, with hot water, for example, is taken for packaging. The coating had a thickness of about 1mm.

As has been stated previously, this coating based essentially on gelatin and sugars will be transparent so that the colour of the core of the ice may be seen, or may equally be coloured a considered most appropriate. It provides a barrier with resitance to melting, which allows there to be contact with the fingers during the time required for consumption of the product without soiling the fingers.

## Claims

1. Edible ice product consisting of an ice confection forming a core representing the major part of the product covered by a thin coating with improved resistance to melting characterised in that the coating is based on a mixture of gelatin and sugars.

2. An ice product according to claim 1 wherein the coating has a thickness in the range about 0.5 to 3.0mm.

3. An ice product according to Claim 1 or 2 wherein the coating is transparent.

4. An ice product according to any preceding claim wherein the coating comprises:
| | |
|---|---|
| 3 to 10% | gelatin |
| 20 to 35% | sugar |
| 30 to 50% | glucose syrup in an aqueous base |

5. A method of preparing an edible ice product comprising the stages:
i) hydration of the gelatin in part of the water;
ii) dissolution of the sugar in the rest of the water at boiling point;
iii) addition of the glucose syrup and hydrated gelatin to the dissolved sugar;
iv) allowing the mixture to reach a temperature between 60 and 65°C, with elimination of the froth;
v) optional addition of the acid, colouring and flavouring;
vi) putting the coating mixture into moulds, freezing and removal of the inner part of the moulds;
vii) introduction into the moulded and solid mixture of the ice product constituting the core and insertion of the stick or support;
viii) demoulding and optional packaging of the product.
